# EUROPEAN PATENT APPLICATION

(11) **EP 2 579 519 A1**
(43) Date of publication of application: **10.04.2013**
(21) Application number: 11789099.6
(22) Date of filing: 12.04.2011
(51) Int. Cl.: H04L 12/56

(54) **METHOD, NETWORK DEVICE AND SYSTEM FOR AUTOMATICALLY CONFIGURING NETWORK DEVICE IN INTERNET PROTOCOL VERSION 6 NETWORK**

(30) Priority: 04.06.2010 CN 201010197648
(71) Applicant: Huawei Technologies Co., Ltd., Shenzhen, Guangdong 518129 (CN)
(72) Inventor: WANG, Huan, Shenzhen Guangdong 518129 (CN); LU, Xushan, Shenzhen Guangdong 518129 (CN); ZHA, Min, Shenzhen Guangdong 518129 (CN); ZHOU, Qian, Shenzhen Guangdong 518129 (CN); ZOU, Ting, Shenzhen Guangdong 518129 (CN)
(74) Representative: Goddar, Heinz J.
(86) International application number: PCT/CN2011/072666
(87) International publication number: WO 2011/150720

(57) **Abstract**

The embodiments of the present invention provide a method for automatically configuring a network device in an IPv6 network. The embodiments of the present invention also provide the corresponding network device and system. The technical solution according to embodiments of the present invention, a network device is configured to obtain an IP address of the network device by sending a router solicitation message to an advertisement router; obtain an IP address of a network management system by sending a Dynamic Host Configuration Protocol DHCP request message to a DHCP server; generate a static route according to the IP address of the network device, the IP address of the network management system, and an IP address of the advertisement router; and register to the network management system according to the generated static route. Using the preceding method, the network device implements an automatic discovery of a newly added IP device in an IPv6 network in the network management system, which reduces the workload for an operator of configuring a network management device and the network device on site, and improves network deployment efficiency.

## Description

This application claims priority to Chinese Patent Application No. 201010197648.4, filed with the Chinese Patent Office on June 4, 2010 and entitled "METHOD, NETWORK DEVICE, AND SYSTEM FOR AUTOMATICALLY CONFIGURING NETWORK DEVICE IN IPv6 NETWORK", which is incorporated by reference herein in its entirety.

### FIELD OF THE INVENTION

The present invention relates to the field of communication technologies, and in particular, to a method, network device, and system for automatically configuring a network device in an IPv6 network.

### BACKGROUND OF THE INVENTION

When a new network is deployed, various Internet Protocol (Internet Protocol, IP) devices need to be initially configured. The IP devices generally need to be configured on site by an operator, or configured remotely by using a modern. With a continuous increase of the IP network devices, the workload of configuring network devices one by one is very huge for an operator. To solve such problem, the prior art normally uses "free-of-software-commissioning on site" technology. To be specific, a remote route is established between a network management system and the devices to enable the network management system to manage the devices. The network management system manages the device by first pinging a device to detect whether the device exists, and then configuring the device using the network management system. In this way, an operator does not need to configure the devices on site.

The inventor finds during the research and practice of the prior art, the process of pinging a device takes 1s if the device exists, takes 3s if the device does not exist. After the IP devices on site use IPv6 (Internet Protocol version 6) addresses, a link local address (Link Local Addess, LLA) of an IPv6 address is usually 64 bits in length. Therefore, under the circumstance of finding thousands of devices in a space containing addressed with the quantity of 2 to the power of 64, and most addresses being invalid addresses, the time for creating valid addresses may be ignored. In this way, the efficiency of finding devices by the network management system is greatly reduced, and resulting in the problem that the devices cannot be discovered automatically in the network management system.

### SUMMARY OF THE INVENTION

Embodiments of the present invention provide a method, network device, and system for automatically configuring a network device in an IPv6 network. In this way, in an IPv6 network, a network management system can automatically discover the IP devices accessing the network, and network deployment efficiency is improved.

An embodiment of the present invention provides a method for automatically configuring a network device in an IPv6 network. The method includes:
obtaining an IP address of the network device by sending a router solicitation message to an advertisement router;
obtaining an IP address of a network management system by sending a Dynamic Host Configuration Protocol DHCP request message to a DHCP server;
generating a static route according to the IP address of the network device, the IP address of the network management system, and an IP address of the advertisement router; and
registering to the network management system by using the generated static route.

An embodiment of the present invention provides a network device. The network device includes:
a first processing unit, configured to obtain an IP address of the network device by sending a router solicitation message to an advertisement router;
a second processing unit, configured to obtain the IP address of a network management system by sending a Dynamic Host Configuration Protocol DHCP request message to a DHCP server;
a static route generating unit, configured to generate a static route according to the IP address of the network device, the IP address of the network management system, and an IP address of the advertisement router; and
a registering unit, configured to register to the network management system by using the generated static route.

An embodiment of the present invention provides a system for automatically configuring a network device in an IPv6 network. The system includes:
a network device, configured to obtain an IP address of the network device by sending a router solicitation message to an advertisement router; obtain an IP address of a network management system by sending a Dynamic Host Configuration Protocol DHCP request message to a DHCP server; generate a static route according to the IP address of the network device, the IP address of the network management system, and an IP address of the advertisement router; and register to the network management system according to the generated static route;
an advertisement router, configured to receive the router solicitation message sent by the network device; and send the IP address of the network device to the network device according to the router solicitation message; and
a DHCP server, configured to receive the DHCP request message sent by the network device, and send the IP address of the network management system to the network device according to the DHCP request message.

In the embodiments of the present invention, when a network device goes online, after the network device obtains the IP address of the network device by using stateless address autoconfiguration (SLAAC), the network device sends a DHCP request message to an advertisement router or a DHCP server. The request message may include a DHCP option used for requesting the DHCP server to return an IP address of a network management system. By using the returned IP address of the network management system or the IP address of the network management system that is obtained by performing resolving on the DNS, a remote route is established between the network management system and the network device. This implements automatic discovery of a newly added IP device in an IPv6 network in the network management system, reduces the workload for an operator in terms of on-site configuration of the network management device and the network device, and improves network deployment efficiency.

### BRIEF DESCRIPTION OF THE DRAWINGS

To make the technical solution provided in embodiments of the present invention or the prior art clear, the accompanying drawings for illustrating the embodiments of the present invention or the prior art are briefly described below. Apparently, the accompanying drawings are exemplary only, and persons of ordinary skills in the art can derive other drawings from such accompanying drawings without any creative effort.
FIG. is a flowchart of a method for automatically configuring a network device in an IPv6 network according to an embodiment of the present invention.
FIG 2 is a flowchart of a specific process of a method for automatically configuring a network device in an IPv6 network according to an embodiment of the present invention;
FIG. 3 is a schematic diagram of a DHCP option according to an embodiment of the present invention;
FIG 4 is a flowchart of a method for automatically configuring a network device in an IPv6 network according to another embodiment of the present invention;
FIG. 5 is a schematic diagram of another DHCP option according to an embodiment of the present invention;
FIG. 6 is a schematic diagram of another DHCP option according to another embodiment of the present invention;
FIG. 7a is a schematic structural diagram of a network device in an IPv6 network according to an embodiment of the present invention;
FIG. 7b is a schematic structural diagram of a first processing unit in an IPv6 network according to an embodiment of the present invention;
FIG. 7c is a schematic structural diagram of a second processing unit in an IPv6 network according to an embodiment of the present invention;
FIG. 7d is a schematic structural diagram of a second processing unit in an IPv6 network according to another embodiment of the present invention; and
FIG 8 is a flowchart of a system for automatically configuring a network device in an IPv6 network according to an embodiment of the present invention.

### DETAILED DESCRIPTION OF THE EMBODIMENTS

The embodiments of the present invention provide a method for automatically configuring a network device in an IPv6 network. The embodiments of the present invention also provide a corresponding device and system. The following describes the method, device, and system in detail.

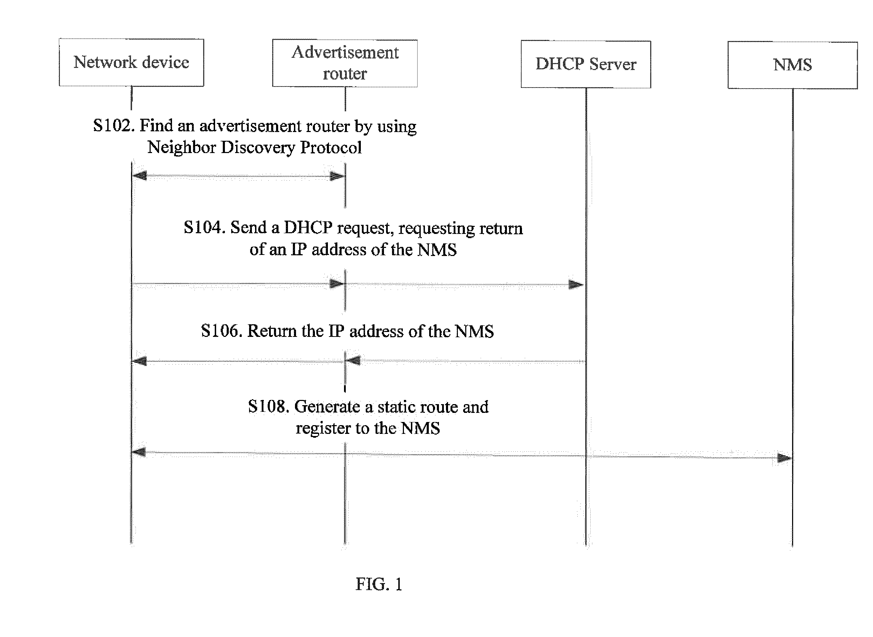

FIG. 1 is a flowchart of a method for automatically configuring a network device in an IPv6 network according to an embodiment of the present invention. The method includes the following steps:
S102. A network device obtains an address of the network device by sending a router solicitation message to an advertisement router.

Specifically, the network device may send the router solicitation message to the advertisement router to request the advertisement router to allocate an IP address to the network device; receive a router advertisement message returned by the advertisement router, and obtain the IP address of the network device; or, the network device may receive the router advertisement message periodically returned by the advertisement router, and obtain the IP address of the network device.

Before step S102, the method further includes: discovering the advertisement router by using the neighbor discovery protocol.

S104. Obtain an IP address of the network management system by sending a Dynamic Host Configuration Protocol DHCP request message to a DHCP server;

The DHCP request message carries a DHCP option, where the DHCP option is used to instruct the DHCP server to return the IP address of the network management system, or instruct the DHCP server to return a fully qualified domain name of the network management system, and the DHCP request message is an information request message.

Optionally, step S104 specifically includes:
sending, by the network device, the DHCP request message to the DHCP server to request the DHCP server to return the IP address of the network management system, and receiving the IP address of the network management system returned by the DHCP server; or sending, by the network device, the DHCP request message to the advertisement router, forwarding the DHCP request message to the DHCP server by the advertisement router, and receiving the IP address of the network management system forwarded by the advertisement router; wherein, the IP address of the network management system is returned according to an instruction of the DHCP option carried in the DHCP request message.

Optionally, step S104 also may specifically include:
sending, by the network device, the DHCP request message to the DHCP server; receiving a fully qualified domain name of the network management system and an IP address of a DNS that are returned by the DHCP server; or forwarding, by the network device, the DHCP request message to the DHCP server by the advertisement router to request the DHCP server to return a fully qualified domain name of the network management system and an IP address of a domain name server DNS, receiving the fully qualified domain name and the IP address of the DNS that are forwarded by the advertisement router, where the fully qualified domain name of the network management system is returned according to an instruction of the DHCP option carried in the DHCP request message; sending, according to the IP address of the domain name server, the fully qualified domain name of the network management system to the domain name server to resolve the domain name; and receiving the resolved IP address of the network management system returned by the domain name server.

The DHCP server may be a stateless DHCP server.

S106. Generate a static route according to the IP address of the network device, the IP address of the network management system, and an IP address of the advertisement router.

S108. Register to the network management system according to the generated static route.

The IPv6 protocol stack needs to start by default when the network device is delivered from the factory. In addition, the network device needs to start by default a process of stateless address allocation, where the network device may be a router newly added in the IPv6 network.

In the embodiments of the present invention, when a network device goes online, after the network device obtains the IP address of the network device by using stateless address autoconfiguration, the network device sends a DHCP request message to an advertisement router or a DHCP server. The request message may include a DHCP option used for requesting the DHCP server to return an IP address of a network management system or a fully qualified domain name of the network management system. By using the returned IP address of the network management system or the IP address of the network management system that is obtained by performing resolving on the DNS, a remote route is established between the network management system and the network device. This implements automatic discovery of a newly added IP device in an IPv6 network in the network management system, reduces the workload for an operator in terms of on-site configuration of the network management device and the network device, and improves network deployment efficiency.

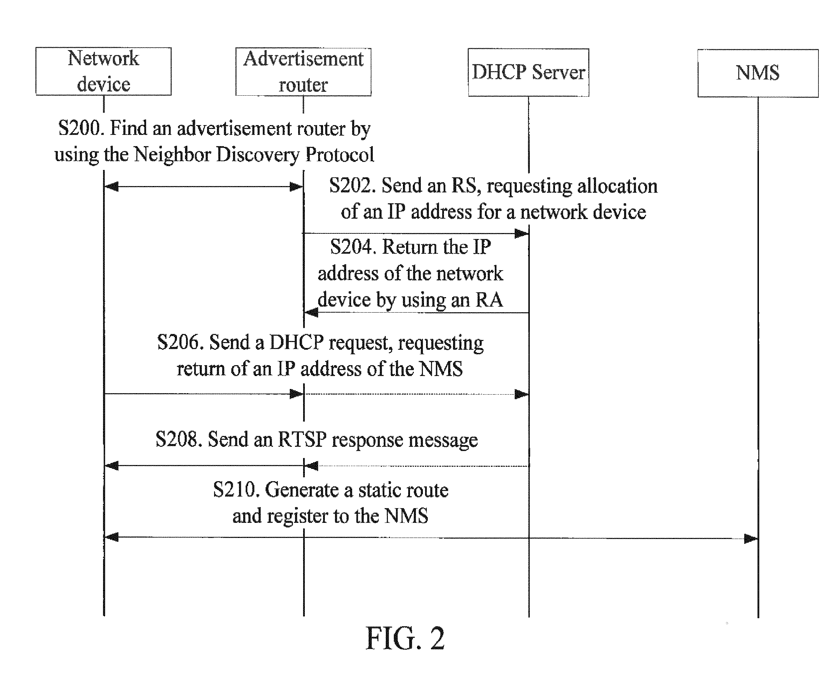

FIG. 2 is a detailed flowchart of a method for automatically configuring a network device in an IPv6 network according to an embodiment of the present invention.

A network management system (Network Management System, NMS) is short for the NMS in the following description.

200. The network device finds an advertisement router in a neighbor discovery way.

The network device may be a newly added network device in an IPv6 network, for example, a router.

202. The network device sends a router solicitation (Router Solicitation, RS) message to the advertisement router to request the advertisement router to allocate an IP address to the network device.

Step 202 is optional. The network device may receive the router advertisement message periodically sent by the advertisement router, and obtain an IP address of the network device. 204. After receiving the RS message, the advertisement router allocates an IP address to the network device, and returns the IP address of the network device to the network device by using a router advertisement (Router Advertisement, RA) message.

206. The network device sends a Dynamic Host Configuration Protocol DHCP request message to a DHCP server (DHCP Server), requesting the DHCP server to return an IP address of the network management system; or sends a DHCP request message to the DHCP server by the advertisement router, requesting the DHCP server to return an IP address of the network management system, where the advertisement router is equivalent to the function of a DHCP relay, that is, a DHCP Relay.

The DHCP request message carries a first DHCP option, where the first DHCP option is used to instruct the DHCP server to return the IP address of the network management system. The DHCP request message is an information request message.

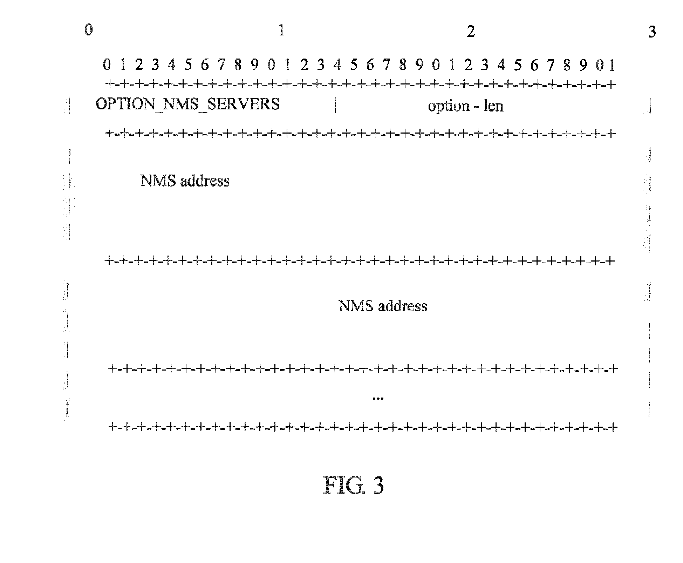

The format of the DHCP request message carrying the DHCP option is shown in FIG. 3.

Fields in the DHCP option shown in FIG 3 are: OPTION-NMS-SERVERS, used to instruct the DHCP server to return the IP address of the network management system; option-len indicating the length of the option; and NMS address indicating the IP address of the network management system. If multiple addresses of the network management system exist, here there are multiple IP addresses of the network management system.

208. The DHCP server returns the IP address of the network management system to the network device, or returns the IP address of the network management system by the advertisement router to the network device.

Specifically, the advertisement router or the DHCP server carries the IP address of the network management system in the returned message. The returned message may be a DHCP relay message. The "NMS address" field of a second DHCP option in the DHCP relay carries the IP address of the network management system. The types of the second DHCP option and the first DHCP option are the same.

Optionally, the second DHCP option may be an existing option, or may be in the same type as the first DHCP option.

The DHCP server may be a stateless DHCP server implementing stateless domain name allocation.

210. The network device automatically generates a static route between the network device and the network management system NMS according to the obtained IP address of the network management system, and registers to the network management system according to the generated static route.

The process of automatically generating the static route between the network device and the network management system NMS is: the network device generates a static route entry according to the address of the network management system and the address of the advertisement router, where a destination address of the static route entry is the address of the network management system, and a next-hop address is the address of the advertisement router. The information that includes the IP address of the network management system, the destination IP address, and the next-hop IP address is sent to an uplink node of the network device. The uplink node is triggered to send the information uplink to another uplink node until the information is sent to a boundary node. The information that includes the IP address of the network management system, the destination IP address, and the next-hop IP address allows the uplink node and the boundary node that receive the information to establish a static routing entry from their network devices to the network management system according to the information.

It should be noted that before the network device performs the preceding processes, the method further includes: The IPv6 protocol stack needs to start by default when the network device is delivered from the factory; in addition, the network device needs to start by default a process of stateless address autoconfiguration SLAAC.

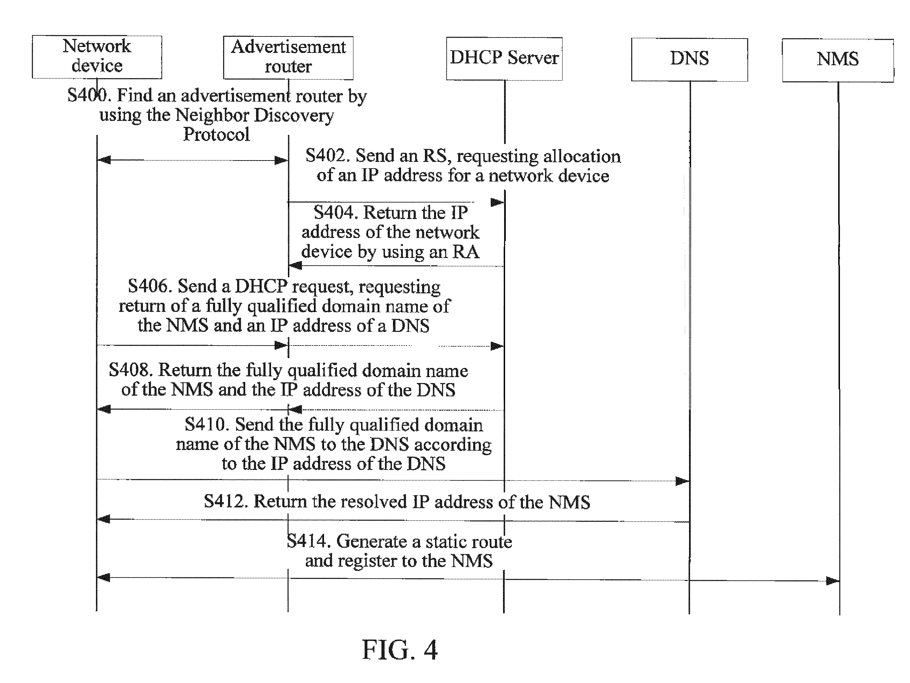

In the embodiments of the present invention, when a network device goes online, after the network device obtains the IPv6 address of the device by using stateless address autoconfiguration (SLAAC), the network device sends a DHCP request message to an advertisement router or a DHCP server. The request may include a DHCP option used for requesting the DHCP server to return an IP address of a network management system. In this manner, the IP address of the network management system is obtained, and a remote route is established between the network management system and the network device. This implements automatic discovery of a newly added IP device in an IPv6 network in the network management system, reduces the workload for an operator in terms of on-site configuration of the network management device and the network device, and improves network deployment efficiency. FIG. 4 is a detailed flowchart of a method for automatically configuring a network device in an IPv6 network according to an embodiment of the present invention.

According to an embodiment of the present invention, a fully qualified domain name (FQDN) of an NMS, is allocated by extending stateless DHCP, that is, an option of stateless DHCP. In this manner, an IP address of the network management system is obtained. The specific method includes the following:
400. A network device finds an advertisement router in a neighbor discovery way.

The network device may be a newly added network device in an IPv6 network, for example, a router.

402. The network device sends a router solicitation (Router Solicitation, RS) message to the advertisement router to request the advertisement router to allocate an IP address to the network device.

Step 402 is optional. The network device may receive the router advertisement message periodically sent by the advertisement router, and obtain an IP address of the network device. 404. After receiving the RS message, the advertisement router allocates an IP address to the network device, and returns the IP address of the network device to the network device by using a router advertisement (Router Advertisement, RA) message.

406. The network device sends a DHCP request message to a DHCP server, requesting the DHCP server to return a fully qualified domain name of a network management system, and an IP address of a domain name server DNS; or sends a DHCP request message to the DHCP server by using the advertisement router, requesting the DHCP server to return a fully qualified domain name of a network management system, and an IP address of a DNS, where the advertisement router is equivalent to the function of a DHCP relay, that is a DHCP Relay.

The DHCP request message carries a first DHCP option, where the first DHCP option is used to request the DHCP server to return the fully qualified domain name (FQDN) of the network management system. The DHCP request message is an information request message. The DHCP request message is further configured to request the DHCP server to return the IP address of the domain name server (Domain Name Server, DNS).

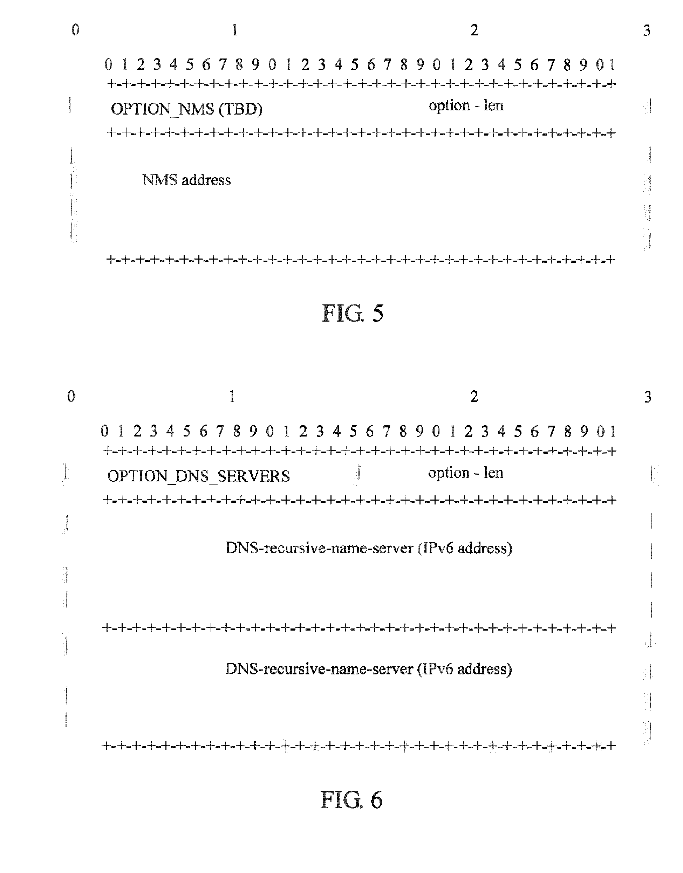

The format of the DHCP request message carrying the DHCP option is shown in FIG. 5 or 6. Fields in the DHCP option shown in FIG. 5 are: OPTION-NMS-SERVERS, used to instruct the DHCP server to return the fully qualified domain name (FQDN) of the network management system; option-len indicating the length of the option; and NMS domain Name indicating the fully qualified domain name of the network management system. Fields in the DHCP option shown in FIG. 6 are: Option-DNS-Servers, used to instruct the DHCP server to obtain the IP address of the DNS; option-len indicating the list length of the DNS recursive name server; and DNS -recursive-name-server indicating the IPv6 address of the DNS recursive name server. Obtaining the IP address of the network management system according to the DHCP option is the inventive point of the present invention. Obtaining the IP address of the DNS according to the DHCP option pertains to the prior art, which is not detailed here again.

Optionally, the DHCP request message may be a stateless DHCP request message, i.e., the stateless DHCP request message.

408. The DHCP server returns the fully qualified domain name of the network management system and the IP address of the DNS to the network device; or the DHCP server returns the fully qualified domain name of the network management system and the IP address of the DNS by the advertisement router to the network device.

The DHCP server may be a stateless DHCP server that implements a stateless domain name allocation. Specifically, the advertisement router or the DHCP server carries the IP address of the network management system in the returned message. The returned message may be a DHCP relay message. The "NMS address" field of a second DHCP option in the DHCP relay message carries the IP address of the network management system. The types of the second DHCP option and the first DHCP option are the same.

410. The network device sends according to the IP address of the DNS the fully qualified domain name of the network management system to the DNS for resolving.

The locations of the DNS and the DHCP server are changeable.

412. The DNS resolves the IP address of the network management according to the fully qualified domain name of the network management system, and sends the IP address of the network management system to the network device.

414. The network device automatically generates a static route between the network device and the network management system NMS according to the obtained IP address of the network management system, and registers to the network management system according to the generated static route.

The process of automatically generating the static route between the network device and the network management system NMS is: the network device generates a static route entry according to the address of the network management system and the address of the advertisement router, where a destination address of the static route entry is the address of the network management system, and a next-hop address is the address of the advertisement router. The information that includes the IP address of the network management system, the destination IP address, and the next-hop IP address is sent to an uplink node of the network device. The uplink node is triggered to send the information uplink to another uplink node until the information is sent to a boundary node. The information that includes the IP address of the network management system, the destination IP address, and the next-hop address allows the uplink node and the boundary node that receives the information to establish a static routing entry from their network devices to the network management system according to the information.

It should be noted that before the network device performs the preceding processes, the method further includes: The IPv6 protocol stack needs to start by default when the network device is delivered from the factory; in addition, the network device needs to start by default a process of stateless address autoconfiguration SLAAC.

In the embodiments of the present invention, when a network device goes online, after the network device obtains the IP address of the device by using stateless address autoconfiguration (SLAAC), the network device sends a DHCP request message to an advertisement router or a DHCP server. The request message may include a DHCP option used for requesting the DHCP server to return the fully qualified domain name of the network management system and the IP address of the DNS. In this manner, the IP address of the network management system is obtained by resolving performed by the DNS. A remote route is established between the network management system and the network device. This implements automatic discovery of a newly added IP device in an IPv6 network in the network management system, reduces the workload for an operator in terms of on-site configuration of the network management device and the network device, and improves network deployment efficiency.

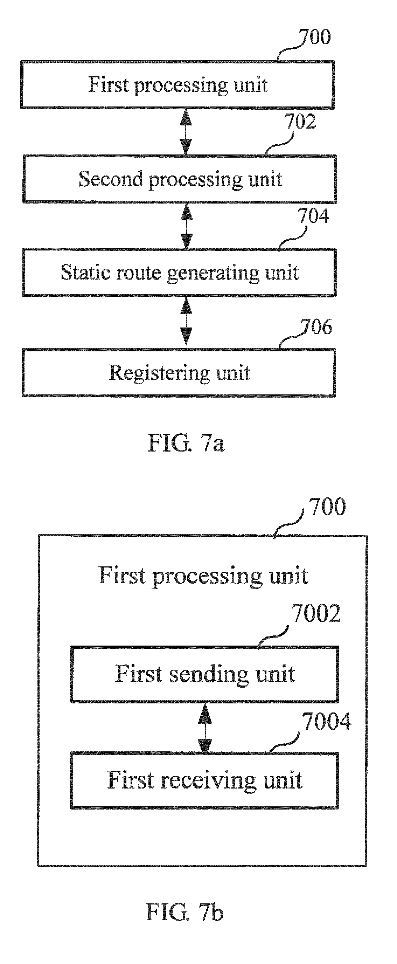

The following describes a network device applied in an IPv6 network. The schematic structural diagram of the network device is shown in FIG. 7a. The network device includes:
a first processing unit 700, configured to obtain an IP address of the network device by sending a router solicitation message to an advertisement router, where
the first processing unit 700 is optional;
a second processing unit 702, configured to obtain an IP address of the network management system by sending a Dynamic Host Configuration Protocol DHCP request message to a DHCP server;
a static route generating unit 704, configured to generate a static route according to the IP address of the network device, the IP address of the network management system, and an IP address of the advertisement router; and
a registering unit 706, configured to register to the network management system according to the generated static route.

The DHCP request message sent by the second processing unit 702 carries a DHCP option, where the DHCP option is used to instruct the DHCP server to return the IP address of the network management system, or instruct the DHCP server to return a fully qualified domain name of the network management system, and the DHCP request message is an information request message.

Optionally, the network device further includes: an advertisement router discovering unit, configured to discover the advertisement router by using the neighbor discovery protocol.

The structural diagram of the first processing unit 700 is shown in FIG. 7b. The first processing unit 700 specifically includes:
a first sending unit 7002, configured to send the router solicitation RS message to the advertisement router to request the advertisement router to allocate an IP address to the network device; and
a first receiving unit 7004, configured to receive a router advertisement RA message returned by the advertisement router, and obtain the IP address of the network device.

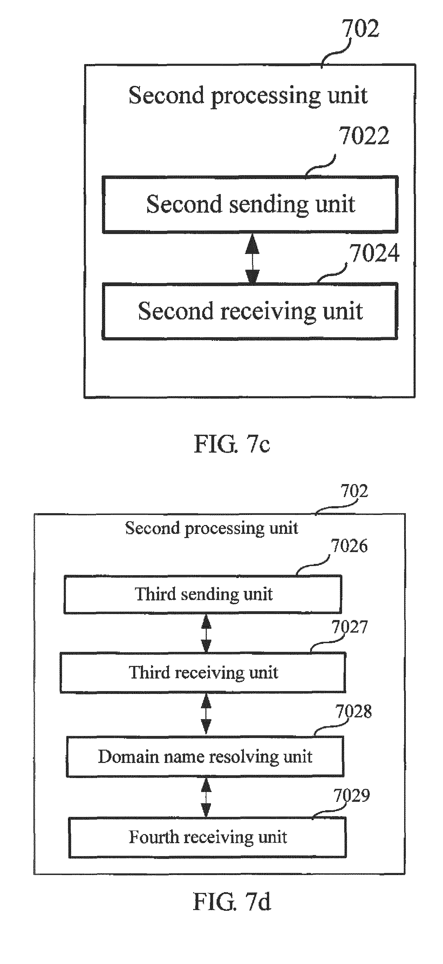

The structural diagram of the second processing unit 702 is shown in FIG. 7c. The second processing unit 702 specifically includes:
a second sending unit 7022, configured to send the DHCP request message to the DHCP server, or forward the DHCP request message to the DHCP server by the advertisement router to request the DHCP server to return the IP address of the network management system; where the IP address of the network management system is returned according to an instruction of the DHCP option carried in the DHCP request message.
a second receiving unit 7024, configured to receive the IP address of the network management system returned by the DHCP server;

The specific implementation process is as follows: The network device sends the Dynamic Host Configuration Protocol DHCP request message to the DHCP server (DHCP Server), requesting the DHCP server to return the IP address of the network management system; or sends the DHCP request message to the DHCP server by the advertisement router, requesting the DHCP server to return the IP address of the network management system, where the advertisement router is equivalent to the function of a DHCP relay, that is, a DHCP Relay.

The DHCP request message carries a DHCP option, where the DHCP option is used to instruct the DHCP server to return the IP address of the network management system, and the DHCP request message is an information, request message information request.

The format of the DHCP request message carrying the DHCP option is shown in FIG. 3. The detail can refer to the related description in the above embodiments, which is not detailed here again.

The structural diagram of the second processing unit 702 is shown in FIG. 7d. The second processing unit 702 also may specifically include:
a third sending unit 7026, configured to send the DHCP request message to the DHCP server, or forward the DHCP request message to the DHCP server by the advertisement router to request the DHCP server to return a fully qualified domain name of the network management system, and an IP address of a domain name server; where the fully qualified domain name of the network management system is returned according to an instruction of the DHCP option carried in the DHCP request message;
a third receiving unit 7027, configured to receive the fully qualified domain name of the network management system, and the IP address of the domain name server returned by the DHCP server, or receive the fully qualified domain name of the network management system, and the IP address of the DNS forwarded by the advertisement router, where the fully qualified domain name of the network management system is returned according to an instruction of the DHCP option carried in the DHCP request message;
a domain name resolving unit 7028, configured to send according to the IP address of the domain name server the fully qualified domain name of the network management system to the DNS for domain name resolving; and
a fourth receiving unit 7029, configured to receive the resolved IP address of the network management system returned by the domain name server.

The specific implementation process is as follows: The network device sends the DHCP request message to the DHCP server, requesting the DHCP server to return the fully qualified domain name of the network management system and the IP address of the domain name server DNS; or sends the DHCP request message to the DHCP server by the advertisement router, requesting the DHCP server to return the fully qualified domain name of the network management system and the IP address of the DNS, where the advertisement router is equivalent to the function of a DHCP relay, that is, a DHCP Relay.

The DHCP server may be a stateless DHCP server implementing a stateless domain name allocation.

The DHCP request message carries a DHCP option, where the DHCP option is used to request the DHCP server to return the fully qualified domain name (FQDN) of the network management system, and the DHCP request message is an information request message information request. The DHCP request message is further used to request the DHCP server to return the IP address of the domain name server (Domain Name Server, DNS).

The format of the DHCP request message carrying the DHCP option is shown in FIG 5 or 6.

FIGs. 5 and 6 are described in detail in the method embodiments, which are not detailed here again.

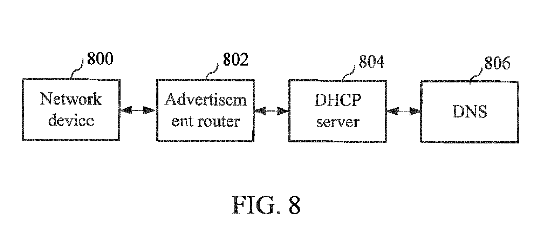

FIG. 8 is a flowchart of a system for automatically configuring a network device in an IPv6 network.

The system includes:
a network device 800, configured to obtain an IP address of the network device by sending a router solicitation message to an advertisement router; obtain an IP address of a network management system by sending a Dynamic Host Configuration Protocol DHCP request message to a DHCP server; generate a static route according to the IP address of the network device, the IP address of the network management system, and an JP address of the advertisement router; and register to the network management system according to the generated static route;
an advertisement router 802, configured to receive the router solicitation message sent by the network device; and send the IP address of the network device to the network device according to the router solicitation message; and
a DHCP server 804, configured to receive the DHCP request message sent by the network device, and send the IP address of the network management system to the network device according to the DHCP request message.

The DHCP server may be a stateless DHCP server implementing a stateless domain name allocation.

The DHCP request message sent by the network device carries a DHCP option, where the DHCP option is used to instruct the DHCP server to return the IP address of the network management system, or instruct the DHCP server to return a fully qualified domain name of the network management system, and the DHCP request message is an information request message.

The system further includes: a domain name server DNS, configured to receive the fully qualified domain name of the network management system sent by the network device, resolve the fully qualified domain name of the network management system, obtain the IP address of the network management system, and send the IP address of the network management system to the network device.

The network device is further configured to send the DHCP request message to the advertisement router, and receive the IP address of the network management system forwarded by the advertisement router.

The advertisement router is further configured to forward the DHCP request message sent by the network device to the DHCP server, to request the DHCP server to return the IP address of the network management system; receive the IP address of the network management system returned by the DHCP server, and forward to the network device.

In the embodiments of the present invention, when a network device goes online, after the network device obtains the IP address of the device by using stateless address autoconfiguration (SLAAC), the network device sends a DHCP request message to an advertisement router or a DHCP server. The DHCP request message may include a DHCP option used for requesting the DHCP server to return an IP address of a network management system or a fully qualified domain mane of the network management system. By using the returned IP address of the network management system or the IP address of the network management system that is obtained by performing resolving on the DNS according to the fully qualified domain name of the network management system, a remote route is established between the network management system and the network device. This implements automatic discovery of a newly added IP device in an IPv6 network in the network management system, reduces the workload for an operator in terms of on-site configuration of the network management device and the network device, and improves network deployment efficiency.

It is understandable to those skilled in the art that all or part of the preceding steps can be implemented by hardware following instructions of programs. The programs may be stored in a computer readable storage medium. The storage medium may be a ROM, a magnetic disk, or a compact disc-read only memory.

Detailed above describes a method, network device, and system for automatically configuring a network device in an IPv6 network according to the embodiments of the present invention. The principle and implementation method of the present invention has been described using some exemplary embodiments. These exemplary embodiments are for illustrating the methods and core ideas of the present invention, but are not intended to limit the present invention. It is apparent that a person of ordinary skill in the art can make various modifications and variations to the invention without departing from the principles of the invention. Therefore, the disclosure in the specification is not intended to limit the present invention.

## Claims

1. A method for automatically configuring a network device in an IPv6 network, comprising:
obtaining an Internet Protocol IP address of the network device by sending a router solicitation message to an advertisement router;
obtaining an IP address of a network management system by sending a Dynamic Host Configuration Protocol DHCP request message to a DHCP server;
generating a static route according to the IP address of the network device, the IP address of the network management system, and an IP address of the advertisement router; and
registering to the network management system by using the generated static route.

2. The method according to claim 1, wherein the DHCP request message carries a DHCP option, and the DHCP option is used to instruct the DHCP server to return the IP address of the network management system, or instruct the DHCP server to return a fully qualified domain name of the network management system, wherein the DHCP request message is an information request message.

3. The method according to claim 1, wherein before the steps in claim1, the method further comprises: discovering the advertisement router by using the neighbor discovery protocol.

4. The method according to claim 1, wherein the obtaining an IP address of a network device by sending a router solicitation message to an advertisement router specifically comprises:
sending the router solicitation message to the advertisement router to request the advertisement router to allocate an IP address to the network device; and
receiving a router advertisement message returned by the advertisement router, and obtaining the IP address of the network device.

5. The method according to claim 2, wherein the obtaining an IP address of a network management system by sending a DHCP request message to a DHCP server specifically comprises:
sending the DHCP request message to the DHCP server to request the DHCP server to return the IP address of the network management system, and receiving the IP address of the network management system returned by the DHCP server; or
forwarding the DHCP request message to the DHCP server by the advertisement router to request the DHCP server to return the IP address of the network management system, and receiving the IP address of the network management system forwarded by the advertisement router, wherein the IP address of the network management system is returned according to an instruction of the DHCP option carried in the DHCP request message.

6. The method according to claim 2, wherein the obtaining an IP address of a network management system by sending a DHCP request message to a DHCP server specifically comprises:
sending the DHCP request message to the DHCP server to request the DHCP server to return the fully qualified domain name of the network management system and an IP address of a domain name server DNS, and receiving the fully qualified domain name of the network management system and the IP address of the DNS returned by the DHCP server; or
forwarding the DHCP request message to the DHCP server by the advertisement router to request the DHCP server to return the fully qualified domain name of the network management system and the IP address of the domain name server DNS, and receiving the fully qualified domain name of the network management system and the IP address of the DNS forwarded by the advertisement router, wherein the fully qualified domain name of the network management system is returned according to an instruction of the DHCP option carried in the DHCP request message;
sending the fully qualified domain name of the network management system to the domain name server for domain name resolving according to the IP address of the domain name server; and
receiving the resolved IP address of the network management system returned by the DNS.

7. A network device used in an IPv6 network, wherein the network device comprises:
a first processing unit, configured to obtain an IP address of the network device by sending a router solicitation message to an advertisement router;
a second processing unit, configured to obtain an IP address of a network management system by sending a Dynamic Host Configuration Protocol DHCP request message to a DHCP server;
a static route generating unit, configured to generate a static route according to the IP address of the network device, the IP address of the network management system, and an IP address of the advertisement router; and
a registering unit, configured to register to the network management system by using the generated static route.

8. The network device according to claim 7, wherein the DHCP request message sent by the second processing unit carries a DHCP option, and the DHCP option is used to instruct the DHCP server to return the IP address of the network management system, or instruct the DHCP server to return a fully qualified domain name of the network management system, wherein the DHCP request message is an information request message.

9. The network device according to claim 7, wherein the network device further comprises:
an advertisement router discovering unit, configured to discover the advertisement router by using the neighbor discovery protocol.

10. The network device according to any one of claims 7-9, wherein the first processing unit comprises:
a first sending unit, configured to send the router solicitation message to the advertisement router to request the advertisement router to allocate an IP address to the network device; and
a first receiving unit, configured to receive a router advertisement message returned by the advertisement router, and obtain the IP address of the network device.

11. The network device according to claim 8, wherein the second processing unit comprises:
a second sending unit, configured to send the DHCP request message to the DHCP server, or forward the DHCP request message to the DHCP server by using the advertisement router to request the DHCP server to return the IP address of the network management system; and
a second receiving unit, configured to receive the IP address of the network management system returned by the DHCP server, or receive the IP address of the network management system forwarded by the advertisement router, wherein the IP address of the network management system is returned according to an instruction of the DHCP option carried in the DHCP request message.

12. The network device according to claim 8, wherein the second processing unit comprises:
a third sending unit, configured to send the DHCP request message to the DHCP server, or forward the DHCP request message to the DHCP server by the advertisement router to request the DHCP server to return the fully qualified domain name of the network management system, and an IP address of a domain name server;
a third receiving unit, configured to receive the fully qualified domain name of the network management system, and the IP address of the domain name server returned by the DHCP server, or receive the fully qualified domain name of the network management system, and the IP address of the domain name server forwarded by the advertisement router, wherein the fully qualified domain name of the network management system is returned according to an instruction of the DHCP option carried in the DHCP request message.
a domain name resolving unit, configured to send according to the IP address of the domain name server, the fully qualified domain name of the network management system to the DNS for domain name resolving; and
a fourth receiving unit, configured to receive the resolved IP address of the network management system returned by the domain name server.

13. A system for automatically configuring a network device in an IPv6 network, wherein the system comprises:
a network device, configured to obtain an IP address of the network device by sending a router solicitation message to an advertisement router; obtain an IP address of a network management system by sending a Dynamic Host Configuration Protocol DHCP request message to a DHCP server; generate a static route according to the IP address of the network device, the IP address of the network management system, and an IP address of the advertisement router; and register to the network management system according to the generated static route;
an advertisement router, configured to receive the router solicitation message sent by the network device; and send the IP address of the network device to the network device according to the router solicitation message; and
a DHCP server, configured to receive the DHCP request message sent by the network device, or receive the DHCP request message forwarded by the advertisement router; and send the IP address of the network management system to the network device according to the DHCP request message.

14. The system according to claim 13, wherein the DHCP request message sent by the network device carries a DHCP option, and the DHCP option is used to instruct the DHCP server to return the IP address of the network management system, or instruct the DHCP server to return a fully qualified domain name of the network management system, wherein the DHCP request message is an information request message.

15. The system according to claim 14, further comprising: a domain name server DNS, configured to receive the fully qualified domain name of the network management system sent by the network device, resolve the fully qualified domain name of the network management system, obtain the IP address of the network management system, and send the IP address of the gateway to the network device.
